# EUROPÄISCHE PATENTSCHRIFT

(11) **EP 3 652 094 B1**
(45) Veröffentlichungstag und Bekanntmachung des Hinweises auf die Patenterteilung: **15.03.2023**
(21) Anmeldenummer: 18734129.2
(22) Anmeldetag: 14.06.2018
(51) Int. Cl.: B65G 47/08

(54) **VERFAHREN UND VORRICHTUNG ZUR HANDHABUNG VON STÜCKGÜTERN, ARTIKELN UND/ODER GEBINDEN**
METHOD AND DEVICE FOR HANDLING GOODS, ARTICLES AND/OR CONTAINERS
PROCÉDÉ ET APPAREIL POUR LA MANUTENTION DE MARCHANDISES, D'ARTICLES ET/OU D'EMBALLAGES

(30) Priorität: 14.07.2017 DE 102017212159
(43) Veröffentlichungstag der Anmeldung: 20.05.2020
(73) Patentinhaber: Krones Aktiengesellschaft, 93073 Neutraubling (DE)
(72) Erfinder: BEER, Erhard, 93073 Neutraubling (DE); SCHWALB, Felix, 93073 Neutraubling (DE); KOLLMUSS, Manuel, 93073 Neutraubling (DE); EHBERGER, Marco, 93073 Neutraubling (DE); MEHDI, Arsalan, 93073 Neutraubling (DE); WESTERMEIER, Christian, 93073 Neutraubling (DE); KIRZINGER, Johannes, 93073 Neutraubling (DE); ASTNER, Michael, 93073 Neutraubling (DE); GRIMM, Sebastian, 93073 Neutraubling (DE)
(74) Vertreter: Benninger, Johannes
(86) Internationale Anmeldenummer: PCT/EP2018/065870
(87) Internationale Veröffentlichungsnummer: WO 2019/011578

(56) Entgegenhaltungen:
- EP-A1- 0 615 929
- EP-A1- 2 792 623
- DE-A1-102008 055 471
- DE-A1-102013 202 872

## Beschreibung

Die vorliegende Erfindung betrifft ein Verfahren und eine Vorrichtung zur Handhabung von Stückgütern, Artikeln und/oder Gebinden gemäß den Merkmalen der unabhängigen Ansprüche 1 bzw. 13.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung durch optische Sensoren wie etwa Lichtschranken vorhanden sein kann. Die Patentschrift EP 2 792 623 A1 offenbart einen solchen Stand der Technik, sowie ein Verfahren zur Handhabung von Stückgütern gemäß dem Oberbegriff des Anspruchs 1. Ebenso denkbar ist es, die Stückgüter vereinzelt von dem Transportband durch schrittweises Fahren des Lagenbildungsbandes zu übergeben. Um auf eine solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z. B. Kartons, Schrumpfpacks, Trays und Kunststoffkisten dienen, kennt der Stand der Technik unterschiedliche Ausführungsvarianten. So können etwa Stückgüter zusammengeführt werden, indem sie in eine zweidimensionale Formation (Blockbildung, z. B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein Zyklus, normalerweise jedoch werden mehrere Zyklen benötigt. Die teilweise diskontinuierliche Förderung mit ihren relativ abrupten Geschwindigkeits- bzw. Richtungsänderungen verursacht entsprechend hohe mechanische Belastungen der Stückgüter, was einer produktschonenden Verarbeitung der Stückgüter abträglich sein kann.

Die Aufgabe der Erfindung besteht darin, ein Verfahren und eine Vorrichtung zur Handhabung und/oder Gruppierung von Stückgütern, Artikeln und/oder Gebinden bereitzustellen, die einen erhöhten Durchsatz gegenüber bekannten Verfahren und Vorrichtungen zur Lagenbildung aufweisen und dabei insbesondere prozesssicher und fehlerfrei arbeiten.

Diese Aufgabe wird mit den Gegenständen der unabhängigen Ansprüche, d.h. durch ein Verfahren und eine Vorrichtung zur Handhabung und/oder Gruppierung von Stückgütern, Artikeln und/oder Gebinden erreicht, welche die Merkmale der unabhängigen Patentansprüche umfassen. Merkmale vorteilhafter Weiterbildungen der Erfindung ergeben sich aus den jeweiligen abhängigen Ansprüchen.

Die Erfindung betrifft ein Verfahren und eine Vorrichtung zur Handhabung und/oder Gruppierung von Stückgütern, Artikeln und/oder Gebinden bei und/oder im Zusammenhang mit deren Gruppierung und/oder deren Lagenbildung, insbesondere zum Zwecke der Ausbildung von aus jeweils mehreren Stückgütern, Artikeln und/oder Gebinden bestehenden palettierfähigen Lagen. Nachfolgend wird generell von Stückgütern gesprochen. Bei den Stückgütern kann es sich um in einer Reihe hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut bilden. Die in Reihe hintereinander bewegten Stückgüter können dabei je nach Anforderung von nachfolgenden Handhabungsvorrichtungen gleich oder unterschiedlich ausgebildet sein.

Die Vorrichtung umfasst mindestens eine Transporteinrichtung zur ein- oder mehrreihige Förderung der Stückgüter, Artikel und/oder Gebinde in einer Transportrichtung. Die in einer Reihe ohne Abstände oder mit minimalen Abständen bewegten und/oder zu einem - insbesondere Manipulationsbereich oder Erfassungsbereich oder Bewegungsraum genannten - Bereich beförderten, mindestens zwei unmittelbar aufeinanderfolgenden Stückgüter werden vorzugsweise als geschlossene Formation transportiert. Mit dem Begriff der geschlossenen Formation ist eine weitgehend lückenlose Aufeinanderfolge von Stückgütern gemeint, die hintereinander transportiert werden. Die geschlossene Formation im Sinne der vorliegenden Erfindung kann eine endliche Länge haben und eine begrenzte Zahl von Stückgütern umfassen, wonach eine Lücke und einer solchen Lücke ggf. eine weitere solche Formation folgen kann, die nachfolgend transportiert wird. Eine solche Abfolge kann sich wiederholen, ggf. auch mehrfach, vielfach oder in unbestimmter Zahl. Die geschlossene Formation kann aber auch als Endlos- Formation transportiert werden, die keine Unterbrechung aufweist und eine beliebige Anzahl von Stückgütern umfasst. Als abweichende Option, die sich gleichwohl auf einige Ausführungsvarianten des erfindungsgemäßen Verfahrens zum Umgang mit in mindestens einer Reihe hintereinander bewegten Stückgütern und/oder der erfindungsgemäßen Vorrichtung zum Umgang mit in mindestens einer Reihe hintereinander bewegten Stückgütern oder auch auf mehrere Ausführungsvarianten dieses Verfahrens bzw. dieser Vorrichtung beziehen kann, können die in definierten Reihen ohne jeweilige Abstände oder mit minimalen jeweiligen Abständen voneinander bewegten und/oder zu einem - insbesondere Manipulationsbereich bzw. Erfassungsbereich genannten - Bereich beförderten, mindestens zwei unmittelbar aufeinanderfolgenden Stückgüter jeweils in getakteten Formationen befördert bzw. transportiert werden. Mit dem Begriff der getakteten Formation und/oder des getakteten Zulaufs ist eine weitgehend regelmäßige Aufeinanderfolge von definierten Reihen von Stückgütern gemeint, die in den definierten Reihen hintereinander transportiert werden, wobei jedoch zwischen aufeinander folgenden Reihen die definierten Lücken auftreten können, was den Begriff der Taktung des Zulaufs bzw. der Taktung der Formationen meint. Die geschlossenen und/oder lückenlosen Reihen im Sinne der vorliegenden Erfindung können jeweils eine endliche Länge haben und eine begrenzte Zahl von Stückgütern umfassen, wonach eine Lücke und einer solchen Lücke ggf. eine weitere solche Reihe mit jeweils lückenlos aufeinander folgenden Stückgütern folgen kann, die nachfolgend transportiert wird. Eine solche Abfolge kann sich wiederholen, ggf. auch mehrfach, vielfach oder in unbestimmter Zahl, vorzugsweise in regelmäßiger Abfolge, ggf. jedoch auch in zyklisch regelmäßigen Mustern oder auch in unregelmäßiger Aufeinanderfolge. Die geschlossenen Reihen einer solchermaßen getakteten Formation können grundsätzlich jeweils eine beliebige Anzahl von Stückgütern umfassen.

Über die mindestens eine Transporteinrichtung werden die Stückgüter ein- oder mehrreihig in jeweils geschlossener und/oder lückenloser Formation oder in Formation mit jeweils zwischen den Stückgütern bestehenden Lücken zu einem Gruppiermodul mit wenigstens einer Horizontalfördereinrichtung sowie mindestens einem Manipulator für die Stückgüter transportiert. Der Manipulator erfasst mindestens eines der in seinen Erfassungsbereich einlaufenden Stückgüter oder auch Gruppen von zwei oder mehr Stückgütern und bringt diese durch Drehen und/oder Verschieben und/oder Heben in eine definierte Lagenanordnung. Dabei entsteht eine sogenannte vorbereitete palettierfähige Lage, bei der noch Lücken zwischen einzelnen Stückgütern vorhanden sein können, die vor dem eigentlichen Palettierschritt noch entfernt werden müssen.

Aus den in geschlossener Formation einlaufenden Stückgütern wird durch den Manipulator des Gruppiermoduls wenigstens ein transportiertes Stückgut nacheinander erfasst und durch Drehen und/oder Verschieben und/oder Heben in eine definierte Lagenanordnung gebracht. Insbesondere wird durch den Manipulator des Gruppiermoduls wenigstens ein transportiertes Stückgut klemmend und/oder kraftschlüssig und/oder formschlüssig erfasst, von der geschlossenen Formation räumlich abgetrennt und in eine definierte relative Zielposition und/oder Zielausrichtung gegenüber nachfolgenden Stückgütern der Formation gebracht.

Aus den geschlossenen Reihen einer getakteten, lückenbehafteten Formationen kann ebenfalls jeweils wenigstens ein transportiertes Stückgut klemmend und/oder kraftschlüssig und/oder formschlüssig erfasst, von der lückenbehafteten Reihe der getakteten Formation räumlich abgetrennt und in eine definierte relative Zielposition und/oder Zielausrichtung bzw. Lagenanordnung gegenüber nachfolgenden Stückgütern der Formation gebracht werden, wobei meist ein zuvorderst befindliches Stückgut der jeweiligen Reihe mittels des Manipulators erfasst und von der Reihe abgegriffen wird.

Wenn im Zusammenhang der vorliegenden Erfindung von einer klemmenden Erfassung von Stückgütern die Rede ist, so umfasst dies ebenso eine kraftschlüssige und/oder reibschlüssige Erfassung, ein kraftschlüssiges und/oder reibschlüssiges Greifen bzw. Aufnehmen von Stückgütern. Alle diese Varianten des Aufnehmens, Erfassens und/oder Greifens von Stückgütern können gleichermaßen mit einem formschlüssigen Erfassen, Greifen bzw. Aufnehmen der Stückgüter kombiniert sein. Wenn im Zusammenhang der vorliegenden Erfindung von einer Zielposition und/oder Zielausrichtung die Rede ist, so kann dies insbesondere bedeuten, dass die Stückgüter erfasst, verschoben und/oder gedreht werden können, wobei die Stückgüter wahlweise auch nur verschoben (ohne Drehung) bzw. nur gedreht (ohne Verschiebebewegung) werden können.

Die Stückgüter werden innerhalb des Gruppiermoduls auf der Horizontalfördereinrichtung mit einer Fördergeschwindigkeit der Horizontalfördereinrichtung transportiert, einzelne Stückgüter oder Gruppen von Stückgütern werden durch den Manipulator erfasst und gegriffen und auf der Horizontalfördereinrichtung verschoben, versetzt, positioniert und/oder neu ausgerichtet. Wahlweise können die Stückgüter hierbei gegenüber einer Fördergeschwindigkeit der Horizontalfördereinrichtung verzögert oder beschleunigt und ggf. gedreht und/oder schräg zu einer Förderrichtung der Horizontalfördereinrichtung versetzt werden. Die Fördergeschwindigkeit der Horizontalfördereinrichtung entspricht in der Regel der Zuführgeschwindigkeit, mit der die Stückgüter über die Transporteinrichtung in das Gruppiermodul einlaufen.

Gemäß verschiedener mit der Vorrichtung durchzuführender Verfahren wird zudem auf die Anmeldung mit dem Aktenzeichen DE 10 2016 225 499.5 verwiesen.

Anschließend kann vorgesehen sein, dass die in die Lagenanordnung gebrachten Stückgüter zu dem Gruppiermodul nachgeordneten weiteren Handhabungs-, Stapelund/oder Palettiermodulen weiterbefördert werden, beispielsweise zu mindestens einer Vorgruppierung, in der gegebenenfalls zwischen den gemäß einem vorgegebenen Lagenschema innerhalb des Gruppiermoduls angeordneten Stückgütern vorhandene Lücken durch Zusammenschieben der innerhalb des Gruppiermoduls vorbereiteten Lage entfernt werden, bevor diese sogenannte komprimierte oder geschlossene Lage beispielsweise auf eine Palette überführt wird.

Gemäß dem hier beschriebenen Verfahren ist vorgesehen, dass nach jedem erneuten Erfassen wenigstens eines Stückgutes mittels des Manipulators und vor dem Verschieben, Drehen und/oder Positionieren des wenigstens einen Stückgutes durch den Manipulator zur Herstellung einer jeweiligen Lagenanordnung eine Distanzierung der durch den Manipulator erfassten Stückgüter von den nachfolgenden Stückgütern der wenigstens einen geschlossenen Formation oder der lückenbehafteten Formation erfolgt. Diese Distanzierung wird durch eine zumindest kurzzeitige Verzögerung der wenigstens einen dem Gruppiermodul vorgeordneten Transporteinrichtung und der Horizontalfördereinrichtung im Gruppiermodul erreicht.

Dadurch wird die Bildung des durch den Manipulator abgegriffenen Taktes von Stückgütern zusätzlich unterstützt. Dies ist vor allem bei der Zuführung der Stückgüter in lückenloser Formation besonders vorteilhaft, da damit geringfügig Zeit für die Anordnung der abgegriffenen Stückgüter gemäß dem vorgegebenen Lagenschema gewonnen wird, in der die nachfolgenden Stückgüter mit reduzierter Geschwindigkeit weiter in das Gruppiermodul einlaufen.

Durch die kurzzeitige Verzögerung der Transporteinrichtung und der Horizontalfördereinrichtung des Gruppiermoduls gegenüber dem Manipulator wird ein Abstand zwischen den vom Manipulator erfassten Stückgüter und den auf der Transporteinrichtung nachfolgenden Stückgütern derselben geschlossenen Formation oder lückenbehafteten Formation vergrößert. Im Gegensatz zu herkömmlich bekannten Lagenbildungsverfahren und Lagenbildungsvorrichtungen ist somit kein zusätzliches Taktbildungsmodul notwendig, um die durch den Manipulator abzugreifenden Stückgüter oder Stückgutgruppen vorab von dem Zustrom an Stückgütern entsprechend abzutrennen und/oder zu vereinzeln. Die hier beschriebene Vorrichtung kann somit deutlich kompakter ausgeführt werden, insbesondere mit einem deutlich geringeren Platzbedarf bzw. footprint.

Gemäß einer Ausführungsform der Erfindung ist vorgesehen, dass die Transporteinrichtung in Transportrichtung eine Grund-Zuführgeschwindigkeit und die Horizontalfördereinrichtung in Transportrichtung eine Grund-Fördergeschwindigkeit aufweisen, die im Wesentlichen gleich sind. Insbesondere werden in das Gruppiermodul einlaufende Stückgüter vor dem Erfassen durch den Manipulator in Transportrichtung mit unveränderter Geschwindigkeit durch die Horizontalfördereinrichtung weitergeführt.

Gemäß einer Ausführungsform der Erfindung kann die Distanzierung der den erfassten Stückgütern nachfolgenden Stückgüter der wenigstens einen geschlossenen Formation oder der lückenbehafteten Formation durch ein zumindest kurzzeitiges Verzögern der Horizontalfördereinrichtung auf eine reduzierte Fördergeschwindigkeit erfolgen. Insbesondere wird die Fördergeschwindigkeit der Horizontalfördereinrichtung in gleicher Weise wie die Zuführgeschwindigkeit der mindestens einen Transporteinrichtung reduziert. Vorzugsweise wird der Manipulator dabei zumindest kurzzeitig mit einer Geschwindigkeit in Transportrichtung bewegt, die größer oder gleich der Grund-Fördergeschwindigkeit der Horizontalfördereinrichtung ist.

Gemäß einer Ausführungsform der Erfindung kann die Distanzierung der den erfassten Stückgütern nachfolgenden Stückgüter der wenigstens einen geschlossenen Formation oder der lückenbehafteten Formation durch ein zumindest kurzzeitiges Beschleunigen des Manipulators mitsamt dem mindestens einen erfassten Stückgut innerhalb des Bewegungsraumes mit mindestens einer Bewegungskomponente in Transportrichtung erfolgen. Die Beschleunigung des Manipulators beim Abgreifen bzw. unmittelbar anschließend an das Erfassen und Abgreifen eines Stückguttaktes durch den Manipulator erfolgt gemeinsam von einer Reduzierung der Fördergeschwindigkeit der Horizontalfördereinrichtung.

Auf diese Weise wird der Abstand zwischen den vom Manipulator erfassten Stückgütern und den nachfolgenden Stückgütern derselben geschlossenen Formation oder lückenbehafteten Formation weiter vergrößert.

Gemäß einer weiteren alternativen Ausführungsform ist vorgesehen, dass die dem Gruppiermodul zugeordnete Horizontalfördereinrichtung nach dem Erfassen von wenigstens einem Stückgut durch den Manipulator zum Zwecke der Positionierung bei der Herstellung einer jeweiligen Lagenanordnung zumindest kurzzeitig gegenüber der Grund- Fördergeschwindigkeit der Transporteinrichtung beschleunigt wird und dass der mindestens eine Manipulator zusammen mit dem wenigstens einen erfassten Stückgut synchron dazu ebenfalls zumindest kurzzeitig gegenüber der Grund-Fördergeschwindigkeit der Transporteinrichtung beschleunigt wird. Insbesondere ist der Betrag der erhöhten Geschwindigkeit des Manipulators in Transportrichtung mindestens gleich oder größer als der Betrag der erhöhten Fördergeschwindigkeit der Horizontalfördereinrichtung.

Gemäß einer Ausführungsform der Erfindung ist dem Erfassungsbereich und/oder dem Bewegungsraum des wenigstens einen Manipulators wenigstens eine Erfassungseinrichtung zugeordnet, mit der Raumkoordinaten und/oder Positionsund/oder Umrissdaten wenigstens eines in Transportrichtung bewegten Stückgutes ermittelt werden können. Anhand der ermittelten Daten wird die wenigstens eine dem Gruppiermodul vorgeordnete Transporteinrichtung und/oder der Manipulator und/oder weitere Förderkomponenten, beispielsweise die Horizontalfördereinrichtung des Gruppiermoduls auf Grundlage der Raumkoordinaten und/oder Positions- und/oder Umrissdaten kalibriert und/oder gesteuert. Hierzu ist die Vorrichtung mit mindestens einer Steuereinheit ausgestattet, die die von der Erfassungseinrichtung übermittelten Signale oder Daten auswertet und entsprechend die Geschwindigkeiten der unterschiedlichen Maschinenkomponenten reguliert.

Bei der Erfassungseinrichtung kann es sich beispielsweise um eine optische Erfassungseinrichtung zur Ermittlung der Raumkoordinaten und/oder Positions- und/oder Umrissdaten handeln. Gemäß einer bevorzugten Ausführungsform kann die Erfassungseinrichtung parallel zur Transportrichtung der Stückgüter entlang der Transporteinrichtung und/oder der Horizontalfördereinrichtung verfahren werden. Eine Vorrichtung mit beweglich ausgebildeter Erfassungseinrichtung wird in der Anmeldung mit dem Aktenzeichen 10 2016 213 400.0 beschrieben.

Weiterhin ist es denkbar, dass eine zumindest kurzzeitige Zulaufverzögerung erfolgt, wenn innerhalb des Gruppiermoduls eine Lagenanordnung einer Stückgutlage komplett fertiggestellt ist.

Dies kann vorteilhaft sein, um einen etwas vergrößerten Abstand zwischen einer fertigen Stückgutlage und einer im Anschluss innerhalb des Gruppiermoduls zu erstellenden weiteren Stückgutlage zu generieren. Ein solcher Abstand kann insbesondere notwendig / hilfreich für die weitere Bearbeitung der Stückgutlage durch nachfolgende Handhabungsmodule, beispielsweise Vorgruppierungsund/oder Palettiermodule sein.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

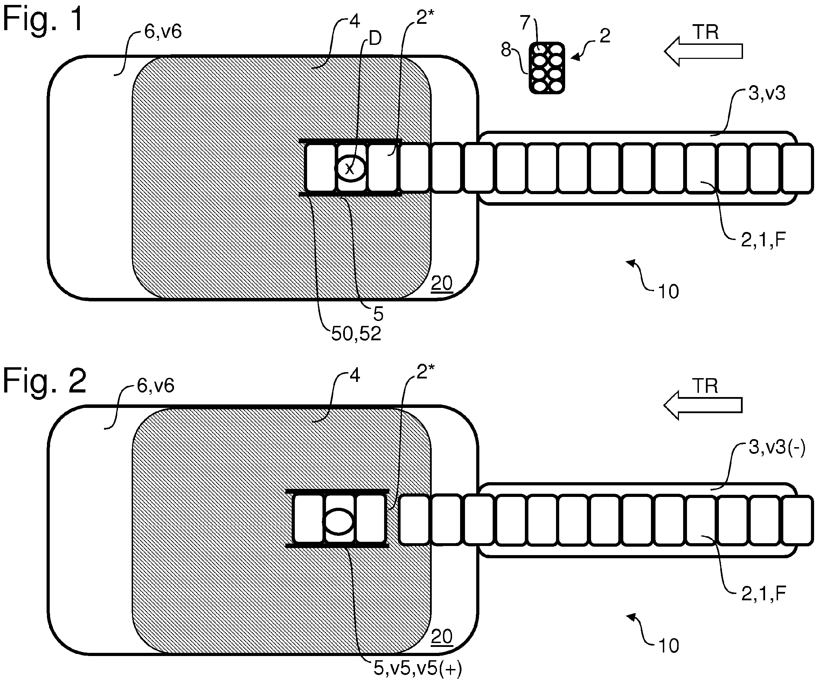

Figuren 1 bis 7 zeigen schematisch einen sinnvollen zeitlichen Ablauf eines ersten Ausführungsbeispiels eines Verfahrens zum Umgang mit in mindestens einer Reihe hintereinander bewegten Stückgütern durch eine entsprechende Handhabungsvorrichtung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Die nachfolgend im Detail erläuterten Figuren 1 bis 7 zeigen in schematischer Weise einen sinnvollen zeitlichen Ablauf eines ersten Ausführungsbeispiels eines Verfahrens zum Umgang mit in mindestens einer Reihe hintereinander bewegten Stückgütern durch eine entsprechende Handhabungsvorrichtung.

Eine in den Figuren 1 bis 7 schematisch angedeutete und jeweils in Draufsicht von oben gezeigte Handhabungsvorrichtung 10 umfasst eine erste Transporteinrichtung 3, über welche unmittelbar aufeinanderfolgende Stückgüter 2 in einer Reihe 1 unterbrechungsfrei und/oder mit kontinuierlicher Transportgeschwindigkeit v3 zu einem Gruppiermodul 20 mit mindestens einem Manipulator 5 transportiert werden, insbesondere in einen Erfassungsbereich 4 (in den Figuren durch Schraffur gekennzeichnet) des mindestens einen Manipulators 5 der Handhabungsvorrichtung 10.

Der Erfassungsbereich 4 meint im vorliegenden Zusammenhang insbesondere den maximalen und/oder den jeweils programmgesteuert vorgegebenen Bewegungsraum des Manipulators 5. Der Erfassungsbereich 4 bzw. dessen äußere räumliche Begrenzung kann/können dabei größer sein als es die Außengrenzen der Horizontalfördereinrichtung 6 vorgeben, auf deren ungefähr horizontalen Oberseite die Stückgüter 2 befördert und/oder mittels des Manipulators 5 positioniert und/oder verschoben werden. Normalerweise jedoch ist der Erfassungsbereich 4 des Manipulators 5 der sinnvolle Bewegungsbereich, in dem sich zu erfassende Stückgüter 2 befinden können und/oder in dem die abzusetzenden Stückgüter 2 positioniert werden können.

Die Transporteinrichtung 3 ist beispielsweise mindestens ein Förderband oder mindestens eine andere geeignete Fördereinrichtung, auf der die Stückgüter 2 vorzugsweise (jeweils) einreihig transportiert werden, wobei zwischen jeweils direkt aufeinander folgenden Stückgütern 2 keine bzw. nur eine geringfügige, gegebenenfalls prozessbedingte und/oder vorgegebene Lücke besteht. Insbesondere kann die Transporteinrichtung 3 durch ein endlos umlaufendes Förderband, eine endlos umlaufende Förderkette o. dgl. gebildet sein, so dass damit die Stückgüter 2 zur Horizontalfördereinrichtung 6 angeliefert und heranbefördert werden können. Die in Reihe 1 auf der Transporteinrichtung 3 befindlichen Stückgüter 2 laufen vorzugsweise mit einer Transportgeschwindigkeit v3 in einer sogenannten geschlossenen Formation F in den Erfassungsbereich 4 des Manipulators 5 ein. Es kann aber auch vorgesehen sein, dass zwischen den Stückgütern 2 der mindestens einen Reihe 1 jeweils definierte Abstände ausgebildet sind. In diesem Fall spricht man von einer getakteten Formation.

Stückgüter 2 im Sinne der vorliegenden Erfindung bzw. des beschriebenen Ausführungsbeispiels können bspw. einzelne Artikel, Pakete oder Gebinde sein. Pakete oder Gebinde können bspw. Schrumpffoliengebinde und/oder Umreifungsgebinde o. dgl. mehr sein, wobei - wie in Fig. 1 beispielhaft dargestellt - normalerweise mehrere Artikel wie insbesondere Behälter, Flüssigkeits- und/oder Getränkebehälter 7 vermittels einer Umverpackung in Form einer Umreifung, einer Schrumpffolie 8 o.ä. zu Gebinden zusammengefasst sind.

Wie bereits erwähnt, ist es optional möglich, dass die Stückgüter 2 auf einer Transporteinrichtung 3 oder auf mehreren, insbesondere parallel angeordneten Transporteinrichtungen 3 mehrreihig, insbesondere in mehreren Parallelreihen zum Erfassungsbereich 4 des Manipulators 5 hin transportiert werden. Die Parallelreihen können dabei beabstandet zueinander oder weitgehend ohne Abstand zueinander auf der wenigstens einen Transporteinrichtung 3 transportiert werden.

Dem Erfassungsbereich 4 des Manipulators ist eine Horizontalfördereinrichtung 6 zugeordnet, deren die Stückgüter 2 tragende Oberfläche sich mit einer Geschwindigkeit v6 bewegt. insbesondere kann die Geschwindigkeit v6 der Horizontalfördereinrichtung 6 der Transportgeschwindigkeit v3 der Transporteinrichtung 3 entsprechen. Wahlweise können die Transportgeschwindigkeit v3 und die Geschwindigkeit v6 auch geringfügig differieren, sofern gewährleistet werden kann, dass die ununterbrochene Förderung der Stückgüter 2 zur Horizontalfördereinrichtung 6 aufrecht erhalten wird.

Die in Reihe 1 bzw. Formation F über die Transporteinrichtung 3 ankommenden Stückgüter 2 können zumindest bei differierenden v3 und v6 durch den aufgrund der höheren Transportgeschwindigkeit v3 ggf. entstehenden Staudruck der nachfolgenden Stückgüter 2 auf die Horizontalfördereinrichtung 6 übergeschoben und dort unterbrechungsfrei weiter befördert werden. Allerdings ist es hierbei notwendig, diesen Staudruck durch geeignete Maßnahmen abzubauen, bspw. mittels eines gummierten Förderbandes der Horizontalfördereinrichtung 6 und/oder mittels eines gummierten Förderbandes der Transporteinrichtung 3, wahlweise auch durch ein zwischen der Transporteinrichtung 3 und der Horizontalfördereinrichtung 6 befindliches sog. Bremsband, das durch eine die Stückgüter 2 tragende Oberfläche mit besonders hohem Reibungskoeffizienten charakterisiert ist. Diese oder andere geeignete Maßnahmen sorgen für eine präzise Positionierung der jeweiligen Stückgüter 2 am jeweiligen Erfassungsort im Erfassungsbereich 4, so dass eine präzise Übernahme durch den Manipulator 5 zu gewährleisten ist. Es soll jedoch betont werden, dass solche Maßnahmen zum Abbau eines ggf. vorhandenen bzw. entstandenen Staudrucks nicht wünschenswert sind, auch wenn sie je nach gewählter Konfiguration der beweglichen Teile unverzichtbar bzw. sinnvoll anzuwenden sind.

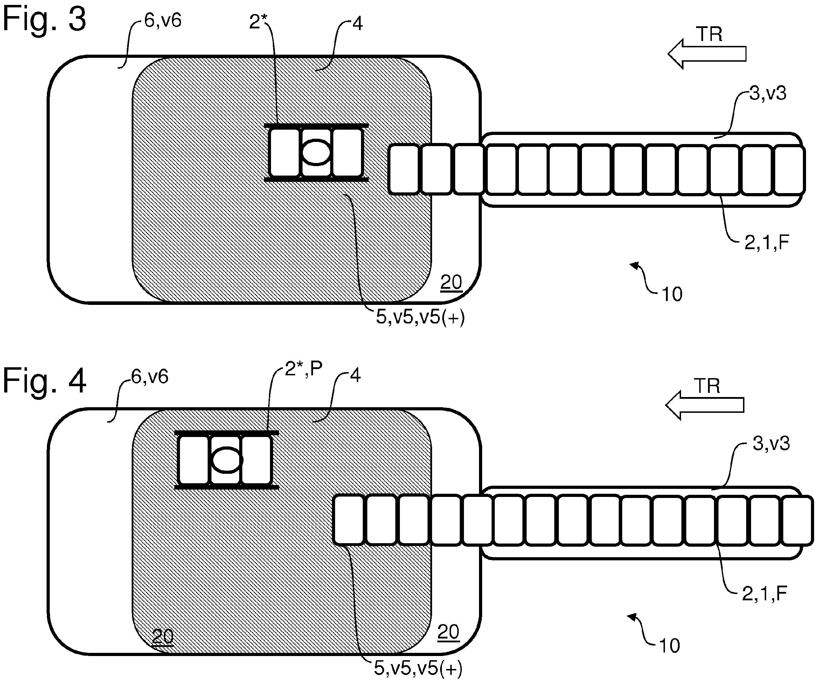

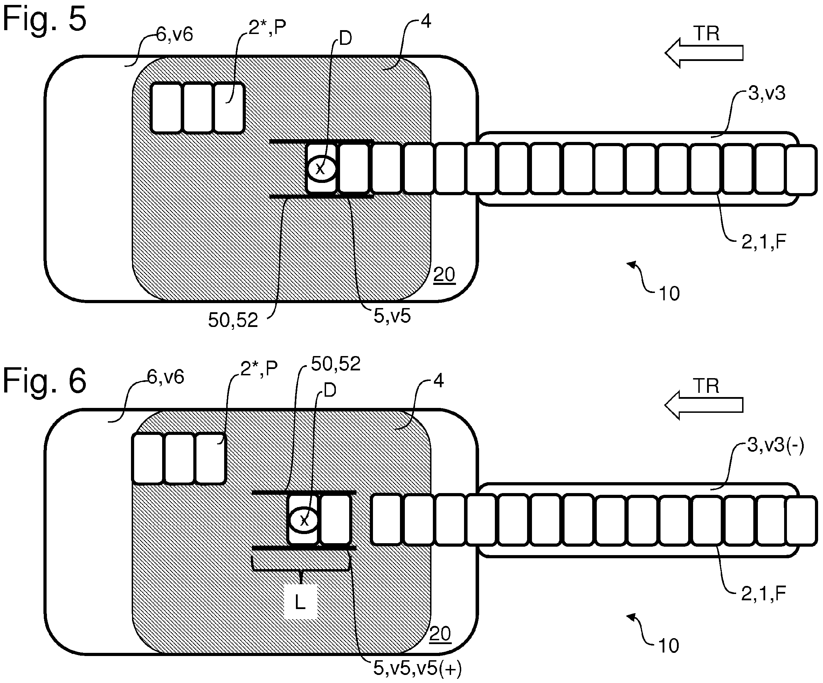

Der Manipulator 5 ist zum klemmenden und/oder formschlüssigen und/oder kraftschlüssigen Entgegennehmen von Stückgütern 2 innerhalb des Erfassungsbereichs 4 ausgebildet und ausgestattet. Die vom Manipulator 5 erfassten Stückgüter 2 - d.h. in der Regel die in der Formation F zuvorderst einlaufenden Stückgüter 2 - werden nachfolgend zur Unterscheidung von den übrigen in der Formation F bzw. der Gesamtformation angeordneten Stückgütern 2 mit dem Bezugszeichen 2* bezeichnet. Insbesondere greift der Manipulator 5 eine gemäß einem für die Lagenbildung vorgegebenen Takt ab, wobei ein Takt eine definierte Anzahl von Stückgütern 2* umfasst. Beispielsweise greift der Manipulator 5 einen Takt umfassend mindestens ein, vorzugsweise mindestens zwei oder drei nacheinander angeordnete der in geschlossener Formation F einlaufenden Stückgüter 2*, trennt diesen von der einreihigen Formation F der Stückgüter 2 ab (vgl. Fig. 2) und überführt den Takt, d.h., das abgetrennte Stückgut 2* bzw. die abgetrennte Gruppe von zwei oder drei lückenlos in Reihe angeordneten Stückgütern 2*, jeweils in eine Zielposition P und/oder Zielausrichtung (vgl. Figuren 4 und 5.). Dabei kann vorgesehen sein, dass das Stückgut 2* bzw. die Gruppe von Stückgütern 2* seitlich gegenüber der einlaufenden Formation F an Stückgütern 2 verschoben wird und/oder es kann vorgesehen sein, dass das Stückgut 2* bzw. die Gruppe von Stückgütern 2* durch den Manipulator 5 in Transportrichtung TR von der Formation F der Stückgüter 2 beabstandet wird und/oder dass das Stückgut 2* bzw. die Gruppe von Stückgütern 2* gegenüber den Stückgütern 2 der Formation F verdreht wird o.ä.

Wenn im vorliegenden Fall bzw. generell im Zusammenhang der vorliegenden Erfindung generalisierend von einem Manipulator 5 die Rede ist, kann es sich konkret bei dem zur Überführung des mindestens einen durch den Manipulator abgegriffenen Stückgutes 2* in die Zielposition P und/oder Zielausrichtung vorgesehenen Teil des Manipulators 5 beispielsweise um einen Werkzeugkopf, einen Greiferkopf 50 o.dgl. handeln (vgl. Fig. 1), der bspw. an beweglich gelagerten Auslegerarmen gehaltert und gelagert ist, welche Auslegerarme wiederum typischerweise an einem Gestell oder Rahmen o. dgl. gestellfest gelagert sein können. Eine solche - auch als Parallelkinematik-Anordnung bekannte - Manipulatoraufhängung bzw. Manipulatoranordnung ermöglicht die gewünschte Beweglichkeit des Greiferkopfes 50 (auch: des Manipulators 5), der die Stückgüter 2* in der gewünschten Weise erfassen, verschieben, positionieren, platzieren, drehen etc. kann, um die jeweiligen Zielpositionen P und/oder Zielausrichtungen für die Stückgüter 2* anfahren zu können. Ebenso denkbar sind jedoch auch andere geeignete Manipulatorkonfigurationen, bspw. solche mit Portalroboter-Führungen oder ähnlichem. Diese anderen Manipulatorkonfigurationen können sich wahlweise auf einzelne, mehrere oder alle Ausführungsvarianten beziehen, die im Zusammenhang der vorliegenden Figurenbeschreibung und/oder der gesamten Erfindungsbeschreibung erwähnt sind.

Der Manipulator 5 kann in diesem Ausführungsbeispiel und/oder im Zusammenhang mit der gesamten vorliegenden Erfindung bspw. durch einen Greiferkopf 50 mit seitlich zustellbaren und öffenbaren Klemmbacken 52 o.ä. gebildet sein (vgl. Fig. 1) oder einen solchen Greiferkopf 50 mit seitlichen Klemmbacken 52 umfassen, welche typischerweise beim Erfassen der Stückgüter 2* gegeneinander zustellbar sind, um die Stückgüter 2* form- und/oder kraftschlüssig zu erfassen bzw. zu klemmen, wogegen die Klemmbacken 52 beim Erreichen der Zielposition P jeweils wieder geöffnet werden können. Wenn im vorliegenden Zusammenhang bzw. bei der vorliegenden Beschreibung daher von einem Manipulator 5 und/oder von einem Greifer oder Greiferkopf 50 die Rede ist, so können diese Begriffe als Synonyme verwendet sein; ggf. ist der Greifer oder Greiferkopf 50 auch als Unterbaugruppe oder Bestandteil des umfassender zu verstehenden Manipulators 5 anzusehen.

In den Figuren 1 bis 4 ist insbesondere das Abgreifen eines Taktes umfassend drei Stückgüter 2* dargestellt. Die Stückgüter 2* des Taktes werden gegenüber den nachfolgend einlaufenden Stückgütern 2 der Formation F in Transportrichtung TR beabstandet und in eine Zielposition P seitlich gegenüber der Flucht der einlaufenden Stückgüter 2 der Formation F verschoben (vgl. Fig. 4), indem durch den Manipulator 5 eine zusätzliche Bewegungskomponente senkrecht zur Transportrichtung TR auf die Stückgüter 2* des Taktes aufgebracht wird. In den Figuren 5 bis 7 ist nachfolgend das Abgreifen eines Taktes umfassend zwei Stückgüter 2* dargestellt. Dabei erfolgt eine unsymmetrische Beladung des Manipulators relativ zu einem Drehpunkt D des Manipulators 5 bzw. relativ zur Länge L der Klemmbacken 52 des Greiferkopfes 50 des Manipulators 5 (vgl. Fig. 6).

Gemäß dem hier beschriebenen Verfahren ist beim Abgreifen mindestens eines Stückgutes 2* durch den Manipulator 5 eine Verzögerung des Zulaufs an weiteren Stückgütern 2 vorgesehen. Insbesondere wird beim Abgreifen mindestens eines Stückgutes 2* durch den Manipulator 5 die Transportgeschwindigkeit v3 der zuführenden Transporteinrichtung 3 zumindest kurzzeitig auf eine reduzierte Transportgeschwindigkeit v3(-) verringert, um die Taktbildung durch den Manipulator 5 zu unterstützen (vergleiche Figuren 2 und 6). Der Manipulator 5 bewegt sich unterdessen mit einer Geschwindigkeit v5 in Transportrichtung TR, die beispielsweise der normalen Transportgeschwindigkeit v3 der Transporteinrichtung 3 und/oder der Fördergeschwindigkeit v6 der Horizontalfördereinrichtung 6 entspricht.

Gemäß einer alternativen Ausführungsform kann vorgesehen sein, dass der Manipulator 5 parallel zur Reduzierung der Transportgeschwindigkeit v3 in Transportrichtung TR beschleunigt wird und somit eine gegenüber der normalen Transportgeschwindigkeit v3 und der Fördergeschwindigkeit v6 der Horizontalfördereinrichtung 6 in Transportrichtung TR erhöhte Geschwindigkeit v5(+) aufweist (vgl. die Figuren 2 und 6).

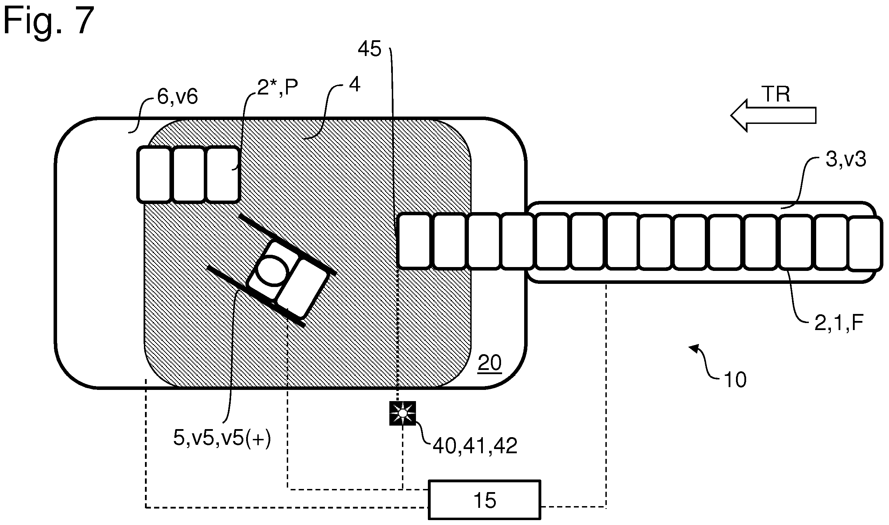

Das zumindest kurzzeitige und/oder geringfügige Abbremsen der Transportgeschwindigkeit v3 der Transporteinrichtung 3 auf eine reduzierte Transportgeschwindigkeit v3(-), ggfl. in Verbindung mit einer Erhöhung der Geschwindigkeit v5 des Manipulators 5 in Transportrichtung TR, unterstützt die Bildung und Abtrennung des gewünschten Taktes umfassend eine definierte Anzahl von Stückgütern 2* von den nachfolgenden Stückgütern 2 der über die Transporteinrichtung 3 zugeführten Reihe 1 bzw. Formation F. Die Geschwindigkeiten v3, v5 der Transporteinrichtung 3 und ggfl. des Manipulatos 5 bzw. deren Änderung werden dabei synchron gesteuert, insbesondere über eine Steuereinheit 15 (nur in Fig. 7 beispielhaft dargestellt). Durch die Änderung der Transportgeschwindigkeit v3 der Transporteinrichtung 3 und ggfl. der Geschwindigkeit v5 des Manipulators 5 wird ein gewisser Abstand zwischen den durch den Manipulator 5 als Takt abgegriffenen Stückgütern 2* und den nachfolgend einlaufenden Stückgütern 2 erzeugt. Der Abstand kann insbesondere notwendig sein, wenn der Manipulator 5 im Zuge des Verbringens der abgegriffenen Stückgüter 2* beispielsweise eine Drehung durchführt, um eine Kollision des Manipulators 5 und der abgegriffenen Stückgüter 2* mit den nachfolgend einlaufenden Stückgütern 2 zu verhindern.

In Fig. 7 ist weiterhin dargestellt, dass dem Erfassungsbereich 4 des Manipulators 5 wenigstens eine Erfassungseinrichtung 40 zugeordnet sein kann, mit der Raumkoordinaten und/oder Positions- und/oder Umrissdaten wenigstens eines in Transportrichtung TR bewegten Stückgutes 2 ermittelt werden können. Beispielsweise kann die Erfassungseinrichtung 40 durch eine optische Erfassungseinrichtung gebildet sein, beispielsweise in Form eines Bilderkennungssensors 41, einer Lichtschranke 42 o.ä., die bestimmte Parameter des zuvorderst einlaufenden Stückgutes 2 der Formation Fdetektiert. Sinnvollerweise kann die Erfassungseinrichtung 40 beispielsweise eine Vorderkante 45 des zuvorderst einlaufenden Stückgutes 2 der Formation F erkennen und somit die genauer Position des Stückgutes 2 relativ zur Horizontalfördereinrichtung 6 des Gruppiermoduls 20 ermitteln.

Anhand der durch die Erfassungseinrichtung 40 ermittelten Daten wird die wenigstens eine dem Gruppiermodul 20 vorgeordnete Transporteinrichtung 3 und/oder der Manipulator 5 und/oder weitere Förderkomponenten, beispielsweise die Horizontalfördereinrichtung 6 des Gruppiermoduls 20, auf Grundlage der Raumkoordinaten und/oder Positions- und/oder Umrissdaten des wenigstens einen in Transportrichtung TR bewegten Stückgutes 2 kalibriert und/oder gesteuert. Hierzu übermittelt die Erfassungseinrichtung 40 Signale oder Daten an die Steuereinheit 15 der Handhabungsvorrichtung 10, die diese insbesondere im Hinblick auf das gewünschte zu erstellende Lagenschema auswertet und entsprechend die Geschwindigkeiten der unterschiedlichen Maschinenkomponenten reguliert.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind. Die Erfindung wurde unter Bezugnahme auf bevorzugte Ausführungsformen beschrieben. Es ist möglich, einige der Komponenten oder Merkmale eines der Beispiele in Kombination mit Merkmalen oder Komponenten eines anderen Beispiels anzuwenden.

### Bezugszeichenliste

- 1: Reihe
- 2: Stückgut
- 2*: abgegriffenes Stückgut
- 3: Transporteinrichtung
- 4: Erfassungsbereich
- 5: Manipulator
- 6: Horizontalfördereinrichtung
- 7: Getränkebehälter
- 8: Schrumpffolie
- 10: Handhabungsvorrichtung
- 15: Steuereinheit
- 20: Gruppiermodul
- 40: Erfassungseinrichtung
- 41: Bilderkennungssensor
- 42: Lichtschranke
- 45: Vorderkante
- 50: Greiferkopf
- 52: Klemmbacke
- F: Formation
- L: Länge
- P: Zielposition
- TR: Transportrichtung
- v3: Transportgeschwindigkeit
- v3(-): reduzierte Transportgeschwindigkeit
- v5: Geschwindigkeit des Manipulators
- v5(+): erhöhte Geschwindigkeit des Manipulators
- v6: Fördergeschwindigkeit

## Patentansprüche

1. Verfahren zur Handhabung von Stückgütern (2), Artikeln und/oder Gebinden bei und/oder im Zusammenhang mit deren Gruppierung und/oder deren Lagenbildung, insbesondere zum Zwecke der Ausbildung von aus jeweils mehreren Stückgütern (2), Artikeln und/oder Gebinden bestehenden palettierfähigen Lagen,
- wobei das Verfahren eine ein- oder mehrreihige Förderung der Stückgüter (2), Artikel und/oder Gebinde mittels wenigstens einer Transporteinrichtung (3) in einer Transportrichtung (TR) in jeweils geschlossener und/oder lückenloser Formation oder in Formation mit jeweils zwischen den Stückgütern (2), Artikeln und/oder Gebinden bestehenden Lücken zu einem Gruppiermodul (20) mit wenigstens einer Horizontalfördereinrichtung (6) sowie mindestens einem Manipulator (5) vorsieht,
- wobei die Stückgüter (2), Artikel und/oder Gebinde mit dem Manipulator (5) innerhalb des Gruppiermoduls (20) von der wenigstens einen geschlossenen Formation (F) oder lückenbehafteten Formation einzeln oder in Gruppen von zwei oder mehr Stückgütern (2), Artikeln und/oder Gebinden nacheinander erfasst und durch Drehen und/oder Verschieben und/oder Heben in eine definierte Lagenanordnung gebracht werden,
- **dadurch gekennzeichnet, dass** nach jedem erneuten Erfassen wenigstens eines Stückgutes (2), Artikels und/oder Gebindes im Erfassungsbereich (4) mittels des Manipulators (5) und vor dem Verschieben, Drehen und/oder Positionieren des wenigstens einen Stückgutes (2), Artikels und/oder Gebindes zur Herstellung einer jeweiligen Lagenanordnung eine Distanzierung der durch den Manipulator (5) erfassten Stückgüter (2), Artikeln und/oder Gebinde von den nachfolgenden Stückgütern (2), Artikel und/oder Gebinde der wenigstens einen geschlossenen Formation (F) oder lückenbehafteten Formation erfolgt,
- indem zumindest kurzzeitig eine Verzögerung der wenigstens einen dem Gruppiermodul (20) vorgeordneten Transporteinrichtung (3) und der Horizontalfördereinrichtung (6) im Gruppiermodul (20) erfolgt.

2. Verfahren nach Anspruch 1, bei dem durch die kurzzeitige Verzögerung der Transporteinrichtung (3) und der Horizontalfördereinrichtung (6) ein Abstand zwischen den vom Manipulator (5) erfassten Stückgütern (2) und den nachfolgenden Stückgütern derselben geschlossenen Formation (F) oder lückenbehafteten Formation vergrößert wird.

3. Verfahren nach Anspruch 1 oder 2, wobei die Transporteinrichtung (3) in Transportrichtung (TR) eine Grund- Zuführgeschwindigkeit (v3) aufweist und wobei die Horizontalfördereinrichtung (6) in Transportrichtung (TR) eine Grund-Fördergeschwindigkeit (v6) aufweist, wobei die Grund- Zuführgeschwindigkeit (v3) und die Grund- Fördergeschwindigkeit (v6) gleich oder synchron sind.

4. Verfahren nach Anspruch 3, bei dem eine Distanzierung der den erfassten Stückgütern (2), Artikeln und/oder Gebinden nachfolgenden Stückgüter (2), Artikel und/oder Gebinde der wenigstens einen geschlossenen Formation (F) oder lückenbehafteten Formation durch zumindest kurzzeitiges synchrones Verzögern der Horizontalfördereinrichtung (6) und der Transporteinrichtung (3) auf eine reduzierte Fördergeschwindigkeit erfolgt.

5. Verfahren nach Anspruch 4, wobei der Manipulator (5) direkt nach dem Erfassen mindestens eines Stückgutes (2), Artikels und/oder Gebindes zumindest kurzzeitig mit einer Geschwindigkeit (v5) in Transportrichtung (TR) bewegt wird, die größer oder gleich der Grund- Fördergeschwindigkeit (v6) der Horizontalfördereinrichtung (6) ist.

6. Verfahren nach Anspruch 5, wobei ein zumindest kurzzeitiges Beschleunigen des Manipulators (5) mitsamt dem mindestens einen erfassten Stückgut (2), Artikel und/oder Gebinde innerhalb des Erfassungsbereichs (4) mit mindestens einer Bewegungskomponente in Transportrichtung (TR) erfolgt.

7. Verfahren nach einem der Ansprüche 4 bis 6, bei dem eine Distanzierung zwischen den vom Manipulator (5) erfassten Stückgütern (2), Artikeln und/oder Gebinden und den nachfolgenden Stückgüter (2), Artikel und/oder Gebinde der wenigstens einen geschlossenen Formation (F) oder lückenbehafteten Formation durch zumindest kurzzeitiges Verzögern der Horizontalfördereinrichtung (6) auf eine reduzierte Fördergeschwindigkeit (v6(-)) und durch zumindest kurzzeitiges Beschleunigen des Manipulators (5) mitsamt dem mindestens einen erfassten Stückgut (2), Artikel und/oder Gebinde innerhalb des Erfassungsbereichs (4) in Transportrichtung (TR) erfolgt.

8. Verfahren nach Anspruch 7, bei dem durch die kurzzeitige Verzögerung der Horizontalfördereinrichtung (3) und durch die kurzzeitige Beschleunigung des Manipulators (5) ein Abstand zwischen den vom Manipulator (5) erfassten Stückgütern (2), Artikeln und/oder Gebinden und den nachfolgenden Stückgütern (2), Artikeln und/oder Gebinden derselben geschlossenen Formation (F) oder lückenbehafteten Formation vergrößert wird.

9. Verfahren nach einem der Ansprüche 1 bis 3, bei dem die dem Gruppiermodul (20) zugeordnete Horizontalfördereinrichtung (6) nach Erfassen von wenigstens einem Stückgut (2), Artikel und/oder Gebinde durch den Manipulator (5) zum Zwecke der Positionierung bei der Herstellung einer jeweiligen Lagenanordnung zumindest kurzzeitig gegenüber der Grund- Fördergeschwindigkeit (v3) der Transporteinrichtung (3) beschleunigt wird, und bei dem der mindestens eine Manipulator (5) zusammen mit dem wenigstens einen erfassten Stückgut (5), Artikel und/oder Gebinde synchron dazu ebenfalls zumindest kurzzeitig gegenüber der Grund- Zuführgeschwindigkeit (v3) der Transporteinrichtung (3) und/oder der Grund- Fördergeschwindigkeit (v6) der Horizontalfördereinrichtung (6) beschleunigt wird.

10. Verfahren nach einem der voranstehenden Ansprüche, wobei dem Erfassungsbereich (4) und/oder dem Bewegungsraum des wenigstens einen Manipulators (5) wenigstens eine Erfassungseinrichtung (40) zugeordnet ist, die zur Gewinnung von Raumkoordinaten und/oder Positionsdaten und/oder Umrissdaten wenigstens eines in Transportrichtung (TR) bewegten Stückgutes (2), Artikels und/oder Gebindes vorbereitet und ausgestattet ist, wobei zumindest die wenigstens eine dem Gruppiermodul (20) vorgeordnete Transporteinrichtung (3) und/oder der Manipulator (5) und/oder weitere Förderkomponenten der Vorrichtung (10) auf Grundlage der Raumkoordinaten und/oder Positionsdaten und/oder Umrissdaten kalibriert und/oder gesteuert werden.

11. Verfahren nach Anspruch 10, wobei die Erfassungseinrichtung (40) eine optische Erfassungseinrichtung ist, die zur Ermittlung der Raumkoordinaten und/oder Positionsdaten und/oder Umrissdaten parallel zur Transportrichtung (TR) der Stückgüter (2) entlang der Transporteinrichtung (3) und/oder der Horizontalfördereinrichtung (6) verfahren wird.

12. Verfahren nach Anspruch 10 oder 11, bei dem die Erfassungseinrichtung (40) entsprechende Signale an eine Steuerungseinheit (15) übermittelt, welche die Geschwindigkeiten der wenigstens einen dem Gruppiermodul (20) vorgeordneten Transporteinrichtung (3) und/oder des Manipulators (5) und/oder weiterer Förderkomponenten der Vorrichtung (10) einstellt.

13. Vorrichtung (10) zur Handhabung von Stückgütern (2), Artikeln und/oder Gebinden zur Durchführung eines Verfahrens nach einem der Ansprüche 1 bis 12 bei und/oder im Zusammenhang mit deren Gruppierung und/oder deren Lagenbildung zum Zwecke der Ausbildung von aus jeweils mehreren Stückgütern (2), Artikeln und/oder Gebinden bestehenden palettierfähigen Lagen.

## Claims

1. A method for handling piece goods (2), articles and/or packs in the case of and/or in relation to their grouping and/or their layer formation, in particular for the purpose of forming palletizable layers, each layer consisting of several piece goods (2), articles and/or packs,
- wherein the method provides for a single-row or multi-row conveying of the piece goods (2), articles and/or packs in each case in a closed and/or gapless formation or in a formation with gaps existing in each case between the piece goods (2), articles and/or packs by means of at least one transport device (3) in a transport direction (TR) to a grouping module (20) with at least one horizontal conveying device (6) as well as at least one manipulator (5),
- wherein the piece goods (2), articles and/or packs are seized one after the other either individually or in groups of two or more piece goods (2), articles and/or packs by the manipulator (5) within the grouping module (20) from the at least one closed formation (F) or from the formation with gaps and are brought into a defined layer arrangement by rotating and/or shifting and/or lifting,
- **characterized in that** after each new seizure of at least one piece good (2), article and/or pack within a seizing range (4) by means of the manipulator (5) and prior to the shifting, rotating and/or positioning of the at least one piece good (2), article and/or pack for the production of a respective layer arrangement, the piece goods (2), articles and/or packs seized by the manipulator (5) are distanced from the subsequently following piece goods (2), articles and/or packs of the at least one closed formation (F) or formation with gaps,
- wherein an at least brief deceleration of the at least one transport device (3) arranged upstream of the grouping module (20) and of the horizontal conveying device (6) located within the grouping module (20) takes place.

2. The method according to claim 1, in which a distance between the piece goods (2) seized by the manipulator (5) and the subsequently following piece goods of the same closed formation (F) or formation with gaps is increased by the brief deceleration of the transport device (3) and the horizontal conveying device (6).

3. The method according to claim 1 or 2, wherein the transport device (3) has a basic feeding speed (v3) in the transport direction (TR) and wherein the horizontal conveying device (6) has a basic conveying speed (v6) in the transport direction (TR), wherein the basic feeding speed (v3) and the basic conveying speed (v6) are equal or synchronous.

4. The method according to claim 3, in which a distancing of the seized piece goods (2), articles and/or packs from the subsequently following piece goods (2), articles and/or packs of the at least one closed formation (F) or formation with gaps takes place by an at least brief synchronous deceleration of the horizontal conveying device (6) and the transport device (3) to a reduced conveying speed.

5. The method according to claim 4, wherein, directly after the seizing of at least one piece good (2), article and/or pack, the manipulator (5) is moved in the transport direction (TR) at least briefly at a speed (v5) which is greater than or equal to the basic conveying speed (v6) of the horizontal conveying device (6).

6. The method according to claim 5, wherein an at least brief acceleration of the manipulator (5) together with the at least one seized piece good (2), article and/or pack takes place within the seizing range (4) with at least one movement component in the transport direction (TR).

7. The method according to one of the claims 4 to 6, in which a distancing between the piece goods (2), articles and/or packs seized by the manipulator (5) and the subsequently following piece goods (2), articles and/or packs of the at least one closed formation (F) or formation with gaps is effected by an at least brief deceleration of the horizontal conveying device (6) to a reduced conveying speed (v6(-)) and by an at least brief acceleration of the manipulator (5) within the seizing range (4) in the transport direction (TR) together with the at least one seized piece good (2), article and/or pack.

8. The method according to claim 7, in which a distance between the piece goods (2), articles and/or packs seized by the manipulator (5) and the subsequently following piece goods (2), articles and/or packs of the same closed formation (F) or formation with gaps is increased by the brief deceleration of the horizontal conveying device (6) and by the brief acceleration of the manipulator (5).

9. The method according to one of the claims 1 to 3, in which the horizontal conveying device (6) assigned to the grouping module (20) is accelerated at least briefly relative to the basic conveying speed (v3) of the transport device (3) after the seizing of at least one piece good (2), article and/or pack by the manipulator (5) for the purpose of positioning during the production of a respective layer arrangement, and in which the at least one manipulator (5) together with the at least one seized piece good (2), article and/or pack is also accelerated in synchronism therewith at least briefly relative to the basic feeding speed (v3) of the transporting device (3) and/or the basic conveying speed (v6) of the horizontal conveying device (6).

10. The method according to one of the preceding claims, wherein at least one detection device (40) is associated with the seizing range (4) and/or the movement space of the at least one manipulator (5), which detection device (40) is prepared and equipped for obtaining spatial coordinates and/or positional data and/or contour data of at least one piece good (2), article and/or pack, which is being moved in the transport direction (TR), wherein at least the at least one transport device (3) arranged upstream of the grouping module (20) and/or wherein the manipulator (5) and/or wherein further conveying components of the device (10) are calibrated and/or controlled on the basis of the spatial coordinates and/or positional data and/or contour data.

11. The method according to claim 10, wherein the detection device (40) is an optical detection device, which is moved parallel to the transport direction (TR) of the piece goods (2) along the transport device (3) and/or the horizontal conveying device (6) in order to determine the spatial coordinates and/or positional data and/or contour data.

12. The method according to claim 10 or 11, in which the detection device (40) transmits corresponding signals to a control unit (15), which control unit (15) sets the speeds of the at least one transport device (3) arranged upstream of the grouping module (20) and/or of the manipulator (5) and/or of further conveying components of the device (10).

13. A device (10) for handling piece goods (2), articles and/or containers for carrying out a method according to one of claims 1 to 12, in the case of and/or in relation to their grouping and/or their layer formation for the purpose of forming palletizable layers consisting in each case of a plurality of piece goods (2), articles and/or packs.

## Revendications

1. Procédé de manipulation de produits de détail (2), d'articles et/ou de multipacks dans et/ou en relation avec leur groupement et/ou leur formation de couches, en particulier en vue de la formation de couches palettisables constituées chacune de plusieurs produits de détail (2), articles et/ou multipacks,
- dans lequel le procédé prévoit un transport en une ou plusieurs rangées des produits de détail (2), articles et/ou multipacks au moyen d'au moins un dispositif de transport (3) dans une direction de transport (TR) dans une formation respectivement fermée et/ou ininterrompue ou dans une formation ayant des lacunes existant respectivement entre les produits de détail (2), les articles et/ou les multipacks, vers un module de groupement (20) comprenant au moins un dispositif de transport horizontal (6) ainsi qu'au moins un manipulateur (5),
- dans lequel les produits de détail (2), les articles et/ou les multipacks sont saisis les uns après les autres par le manipulateur (5) à l'intérieur du module de groupement (20) de ladite au moins une formation fermée (F) ou formation à lacunes, soit individuellement soit par groupes de deux ou plusieurs produits de détail (2), articles et/ou multipacks, et sont amenés dans un agencement en couches défini en les tournant et/ou déplaçant et/ou soulevant,
- **caractérisé par le fait qu'**après chaque nouvelle saisie d'au moins un produit de détail (2), article et/ou multipack dans la zone de saisie (4) au moyen du manipulateur (5) et avant le déplacement, la rotation et/ou le positionnement dudit au moins un produit de détail (2), article et/ou multipack pour réaliser un agencement en couches respectif, les produits de détail (2), articles et/ou multipacks saisis par le manipulateur (5) sont espacés des produits de détail (2), articles et/ou multipacks suivants de ladite au moins une formation fermée (F) ou formation à lacunes,
- en ce que ledit au moins un dispositif de transport (3) disposé en amont du module de groupement (20) et le dispositif de transport horizontal (6) dans le module de groupement (20) sont retardés au moins brièvement.

2. Procédé selon la revendication 1, dans lequel le bref retard du dispositif de transport (3) et du dispositif de transport horizontal (6) conduit à ce qu'une distance entre les produits de détail (2) saisis par le manipulateur (5) et les produits de détail suivants de la même formation fermée (F) ou formation à lacunes soit agrandie.

3. Procédé selon la revendication 1 ou 2, dans lequel le dispositif de transport (3) présente une vitesse d'amenée de base (v3) dans la direction de transport (TR) et dans lequel le dispositif de transport horizontal (6) présente une vitesse de transport de base (v6) dans la direction de transport (TR), dans lequel la vitesse d'amenée de base (v3) et la vitesse de transport de base (v6) sont identiques ou synchrones.

4. Procédé selon la revendication 3, dans lequel un espacement des produits de détail (2), articles et/ou multipacks de ladite au moins une formation fermée (F) ou formation à lacunes, qui suivent les produits de détail (2), articles et/ou multipacks saisis, se fait en retardant au moins brièvement de manière synchrone le dispositif de transport horizontal (6) et le dispositif de transport (3) à une vitesse de transport réduite.

5. Procédé selon la revendication 4, dans lequel, directement après la saisie d'au moins un produit de détail (2), article et/ou multipack, le manipulateur (5) est déplacé au moins brièvement à une vitesse (v5) dans la direction de transport (TR), qui est supérieure ou égale à la vitesse de transport de base (v6) du dispositif de transport horizontal (6).

6. Procédé selon la revendication 5, dans lequel une accélération au moins brève du manipulateur (5) conjointement avec ledit au moins un produit de détail (2), article et/ou multipack saisi, à l'intérieur de la zone de saisie (4), se fait avec au moins une composante de mouvement dans la direction de transport (TR).

7. Procédé selon l'une quelconque des revendications 4 à 6, dans lequel un espacement séparant les produits de détail (2), articles et/ou multipacks saisis par le manipulateur (5) et les produits de détail (2), articles et/ou multipacks suivants de ladite au moins une formation fermée (F) ou formation à lacunes se fait en retardant au moins brièvement le dispositif de transport horizontal (6) à une vitesse de transport réduite (v6(-)) et en accélérant au moins brièvement le manipulateur (5) conjointement avec ledit au moins un produit de détail (2), article et/ou multipack saisi à l'intérieur de la zone de saisie (4) dans la direction de transport (TR).

8. Procédé selon la revendication 7, dans lequel le bref retard du dispositif de transport horizontal (6) et la brève accélération du manipulateur (5) conduit à ce qu'une distance existant entre les produits de détail (2), articles et/ou multipacks saisis par le manipulateur (5) et les produits de détail (2), articles et/ou multipacks suivants de la même formation fermée (F) ou formation à lacunes soit agrandie.

9. Procédé selon l'une quelconque des revendications 1 à 3, dans lequel, après qu'au moins un produit de détail (2), article et/ou multipack a été saisi par le manipulateur (5), le dispositif de transport horizontal (6) associé au module de groupement (20) est accéléré, en vue du positionnement, lors de la production d'un agencement en couches respectif, au moins brièvement par rapport à la vitesse de transport de base (v3) du dispositif de transport (3), et dans lequel, en synchronisme avec ceci, ledit au moins un manipulateur (5) conjointement avec ledit au moins un produit de détail (2), article et/ou multipack saisi est accéléré également au moins brièvement par rapport à la vitesse d'amenée de base (v3) du dispositif de transport (3) et/ou à la vitesse de transport de base (v6) du dispositif de transport horizontal (6).

10. Procédé selon l'une quelconque des revendications précédentes, dans lequel au moins un dispositif de détection (40) qui est préparé et équipé pour obtenir des coordonnées spatiales et/ou des données de position et/ou des données de contour d'au moins un produit de détail (2), article et/ou multipack déplacé dans la direction de transport (TR) est associé à la zone de saisie (4) et/ou à l'espace de mouvement dudit au moins un manipulateur (5), dans lequel du moins ledit au moins un dispositif de transport (3) disposé en amont du module de groupement (20) et/ou le manipulateur (5) et/ou d'autres composants de transport du dispositif (10) sont calibrés et/ou commandés sur la base des coordonnées spatiales et/ou des données de position et/ou des données de contour.

11. Procédé selon la revendication 10, dans lequel le dispositif de détection (40) est un dispositif de détection optique qui est déplacé parallèlement à la direction de transport (TR) des produits de détail (2) le long du dispositif de transport (3) et/ou du dispositif de transport horizontal (6), pour déterminer les coordonnées spatiales et/ou les données de position et/ou les données de contour.

12. Procédé selon la revendication 10 ou 11, dans lequel le dispositif de détection (40) transmet des signaux correspondants à une unité de commande (15) qui règle les vitesses dudit au moins un dispositif de transport (3) disposé en amont du module de groupement (20) et/ou du manipulateur (5) et/ou d'autres composants de transport du dispositif (10).

13. Dispositif (10) de manipulation de produits de détail (2), d'articles et/ou de multipacks, destiné à mettre en oeuvre un procédé selon l'une quelconque des revendications 1 à 12, dans et/ou en relation avec leur groupement et/ou leur formation de couches, en vue de la formation de couches palettisables constituées chacune de plusieurs produits de détail (2), articles et/ou multipacks.
